(19) Europäisches Patentamt
European Patent Office
Office européen des brevets

(11) **EP 2 844 019 A1**

(12) **EUROPEAN PATENT APPLICATION**

(43) Date of publication:
**04.03.2015 Bulletin 2015/10**

(51) Int Cl.:
***H04W 74/08*** (2009.01)

(21) Application number: **14176882.0**

(22) Date of filing: **14.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.08.2013 JP 2013180583**

(71) Applicant: **FUJITSU LIMITED
Kawasaki-shi,
Kanagawa 211-8588 (JP)**

(72) Inventor: **Morosawa, Atsushi
Kanagawa, 211-8588 (JP)**

(74) Representative: **Hoffmann Eitle
Patent- und Rechtsanwälte PartmbB
Arabellastraße 30
81925 München (DE)**

(54) **Communication apparatus, communication-apparatus control method, communication-apparatus control program, information processing apparatus, and information processing system**

(57) An elapsed-time measuring unit (133) measures elapsed time of a set standby time. A determining unit (104) determines whether a communication path to a transmission destination of data is available. A transmitting unit (101) transmits data when the standby time passes in a state in which the communication path is available after it is determined that the communication path is available by the determining unit. An initial-value setting unit (132) sets, as the standby time, an initial value that is generated using a predetermined time as a unit at start of data transmission by the transmitting unit, and that is a different value from an initial value of another wireless module that communicates with the transmission destination. A resetting unit (134) resets, as the standby time, a resetting value that is generated using the predetermined time as a unit when the standby time has passed.

FIG.3

**Description**

FIELD

The embodiments discussed herein are related to a communication apparatus, a communication-apparatus control method, a communication-apparatus control program, an information processing apparatus, and an information processing system.

BACKGROUND

The transmission rate has been improving splendidly by recent development of wireless technology. By standards, such as Institute-of-Electrical-and-Electronic-Engineers Inc. (IEEE) 802.11ac and IEEE 802.11ad, the transmission rate of several gigabits per second (Gbps) can be realized. Therefore, application of IEEE802.11ac or IEEE802.11ad standard to the wireless communications between servers is expected.

Communication between nodes is performed through access points. The node refers to a communication device in general such as a server and a client. Moreover, the access point refers to a device that performs mediation in wireless communications such as connection between nodes.

As a communication scheme between nodes, there is a carrier sense multiple access with collision avoidance (CSMA/CA) scheme that avoids access contention. In the CSMA/CA scheme, a node performs data transmission to a node of a communication destination, after confirming that the communication path between access points is vacant for a predetermined period of time or more continuously. In the explanation below, the communication path may be referred to as "channel". In the CSMA/CA scheme, collision is avoided by changing the timing of transmission of frames for each node after detection of the channel being in the idle state by carrier sense.

In the IEEE802.11 standard, an inter frame space (IFS) is defined as a signal transmission interval before transmission of a signal. IFS is a period until it is determined that a channel has shifted to an idle state in a node when a radio wave is no longer detected in the channel that used to be busy. For IFS, three kinds of IFS, short IFS (SIFS), point coordination function (PCF) IFS (PIFS), and distributed coordination function (DCF) IFS (DIFS) are defined.

SIFS is IFS that is used for an acknowledgement (ACK), which is a signal for response, and the like and has the highest priority. When the DIFS period has passed, each node can perform data transmission to an access point after the back-off time that is assigned to each node passes. To the back-off time, a value generated from the random number table for each node is set.

For example, when a node performs data transmission, the channel is to be in a busy state. Therefore, when the back-off time of one node has passed and the node has performed data transmission to an access point, the other nodes wait for the DIFS period after confirming that the channel becomes in the idle state, and then start counting the back-off time. That is, at a certain point of time, the node that has the shortest back-off time is to be the node that performs data transmission first after the point of time. When one node performs data transmission to an access point, the other nodes carry over the back-off time until the next count. Upon receiving the data, the access point sends an acknowledgement to the node of the source of transmission. The node that has performed the data transmission and received the acknowledgement from the access point resets the back-off time.

For example, a back-off time can be calculated by multiplying a random number within a contention window (CW) and a slot time. The random number within the CW is a value that is generated at random with the value of the CW as the upper limit. Moreover, the slot time is a fixed period of time. Each node has a value of the same CW and the slot time.

As described, in the CSMA/CA scheme, access contention among nodes is avoided by setting a back-off time that is generated from a random number table for each node.

The following techniques have been proposed as a method of avoiding access contention in wireless communications. For example, there is a related technique in which different back-off values are given to respective nodes from an access point. Moreover, there is a related technique in which an offset value is added to values of random number within a CW to calculate a back-off time, and the back-off time is notified to each node (Japanese Laid-open Patent Publication No. 2012-178694 and Japanese Laid-open Patent Publication No. 2005-64795).

However, a back-off time is calculated using a random number value within the CW, without specifying the number of nodes connected to an access point. In this point, when the number of nodes connected to an access point is fixed, access contention can be avoided, in some cases, in a period shorter than the back-off time calculated using the random number value within the CW. That is, when a back-off time is calculated using a random number value within the CW, there is a possibility that a node is forced to have needless standby time depending on a value of the calculated back-off time if the number of nodes connected to an access point is fixed.

Moreover, when a back-off time is calculated using a random number value within the CW, it can occur that an identical back-off time is set to two or more nodes. In that case, access contention occurs.

When the related technique in which various back-off values are set for nodes from an access point is applied, it returns to the method of using a random-number value within the CW when successive data is not present, and therefore, reduction of the standby time and suppression of occurrence of access contention are difficult.

Moreover, even if the related technique in which an offset value is added to random number values within the CW to notify a back-off time is applied, reduction of the standby time and suppression of occurrence of access contention are difficult.

Accordingly, it is an object in one aspect of an embodiment of the invention to provide a communication apparatus, a communication-apparatus control method, a communication-apparatus control program, an information processing apparatus, and an information processing system that suppress occurrence of access contention while reducing standby time.

SUMMARY

According to an aspect of the embodiments, a communication apparatus includes: an elapsed-time measuring unit; a determining unit; a transmitting unit; an initial-value setting unit; and a resetting unit. The elapsed-time measuring unit measures elapsed time of a set standby time. The determining unit determines whether a communication path to a transmission destination of data is available. The transmitting unit transmits data when the standby time passes in a state in which the communication path is available after it is determined that the communication path is available by the determining unit. The initial-value setting unit sets, as the standby time, an initial value that is generated using a predetermined time as a unit at start of data transmission by the transmitting unit, and that is a different value from an initial value of another communication apparatus that communicates with the transmission destination. The resetting unit resets, as the standby time, a resetting value that is generated using the predetermined time as a unit when the standby time has passed.

BRIEF DESCRIPTION OF DRAWINGS

FIG. 1 is a configuration diagram depicting an example of an information processing system;
FIG. 2 is a configuration diagram depicting the details of a server;
FIG. 3 is a block diagram depicting details of a wireless module;
FIG. 4 is a table indicating an example of information stored in a setting register according to a first embodiment;
FIG. 5 is a sequence diagram indicating communication when all servers have a transmission data in the first embodiment;
FIG. 6 is a sequence diagram indicating communication when a server that has no transmission data is included in the first embodiment;
FIG. 7 is a flowchart of a wireless-communication processing in a wireless module according to the first embodiment;
FIG. 8 is a configuration diagram illustrating another example of the information processing system;
FIG. 9 is a sequence diagram indicating communication in an information processing system according to a second embodiment;
FIG. 10 is a table indicating an example of information stored in a setting register according to a third embodiment;
FIG. 11 is a sequence diagram indicating communication in an information processing system according to the third embodiment; and
FIG. 12 is a sequence diagram indicating communication in an information processing system according to a fourth embodiment.

DESCRIPTION OF EMBODIMENTS

Preferred embodiments will be explained with reference to accompanying drawings. Note that the communication apparatus, the communication-apparatus control method, the communication-apparatus control program, the information processing apparatus, and the information processing system disclosed in the present application are not limited to the following embodiments.

[a] First Embodiment

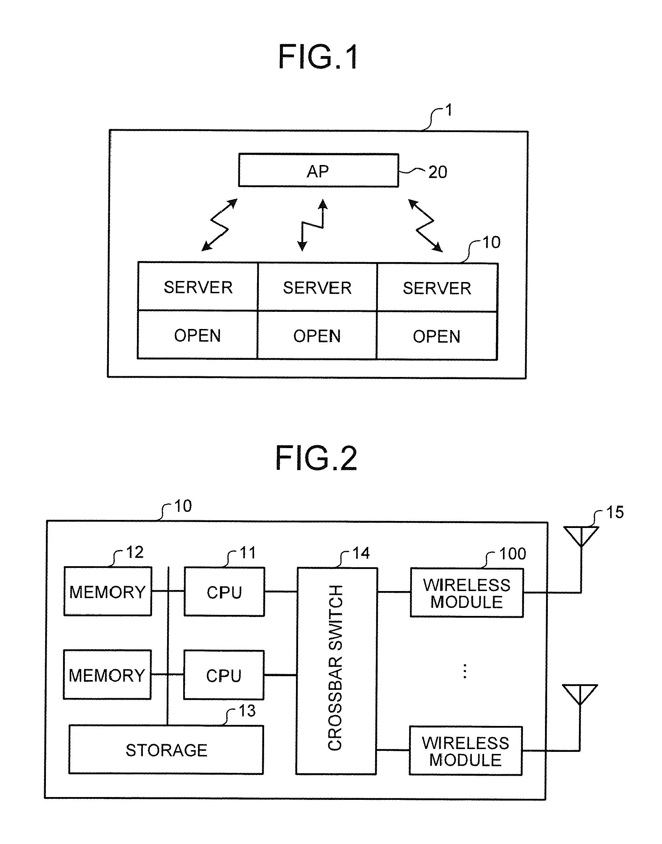

FIG. 1 is a configuration diagram depicting an example of an information processing system. In an information processing system according to the present embodiment, more than one information processing apparatus (hereinafter "server") 10 and an access point (AP) 20 are mounted in a rack 1. It is possible that a large number of the servers 10 are mounted in the rack 1. In such a case, when the servers 10 are connected using a local area network (LAN) cables and the like, a lot of cables are to be arranged, and the management of the cables becomes complicated. Therefore, wiring can be simplified by connecting the servers 10 in the rack 1 to a network using a wireless LAN.

Although three units of the servers 10 are illustrated in FIG. 1 as an example of the configuration, the number of the servers 10 is not particularly limited. Moreover, although three open spaces for mounting the server 10 are illustrated in FIG. 1, the number of those is also not particularly limited.

Moreover, although one unit of the access point 20 is illustrated in FIG. 1, it is not limited thereto. For example, when the number of the servers 10 is more than the number that can be managed by a single unit of the access point 20, the servers 10 may be divided into groups, and a different unit of the access point 20 to be connected may be assigned to each group. In the following explanation, a group to which one unit of the access point 20 and multiple units of the servers 10 belong is explained, and when more than one group is present, similar processing is performed in each group.

The server 10 and the access point 20 perform mutual data communication using wireless communications.

The server 10 communicates with another information processing apparatus, such as another unit of the servers 10 and an external information processing apparatus, through the access point 20. Specifically, the server 10 transmits data to another information processing apparatus by transmitting the data to be transmitted to the information processing apparatus, to the access point 20. Moreover, the server 10 receives data transmitted from another information processing apparatus from the access point 20.

FIG. 2 is a configuration diagram depicting the details of the server. The server 10 includes central processing units (CPU) 11, memories 12, a storage 13, and a crossbar switch 14. Furthermore, the server 10 includes wireless modules 100 and antennas 15 each of which corresponds to each of the wireless modules 100.

The memories 12 and the storage 13 are connected to the CPU 11 through a bus. The CPU 11 can write and read data to and from the memories 12 and the storage 13. The CPU 11 executes a program and the like stored in the storage 13 by developing in the memory 12.

The CPUs 11 are connected to the wireless modules 100, respectively, through the crossbar switch 14. The CPU 11 transmits data to be transmitted to another information processing apparatus, to the wireless module 100 through the crossbar switch 14. Moreover, the CPU 11 receives data from another information processing apparatus from the wireless module 100 through the crossbar switch 14.

The wireless module 100 outputs data received from the crossbar switch 14 to the access point 20 through the antenna 15. Furthermore, the wireless module 100 receives data transmitted by another information processing apparatuses from the access point 20. The wireless module 100 then transmits the received data to the CPU 11 through the crossbar switch 14.

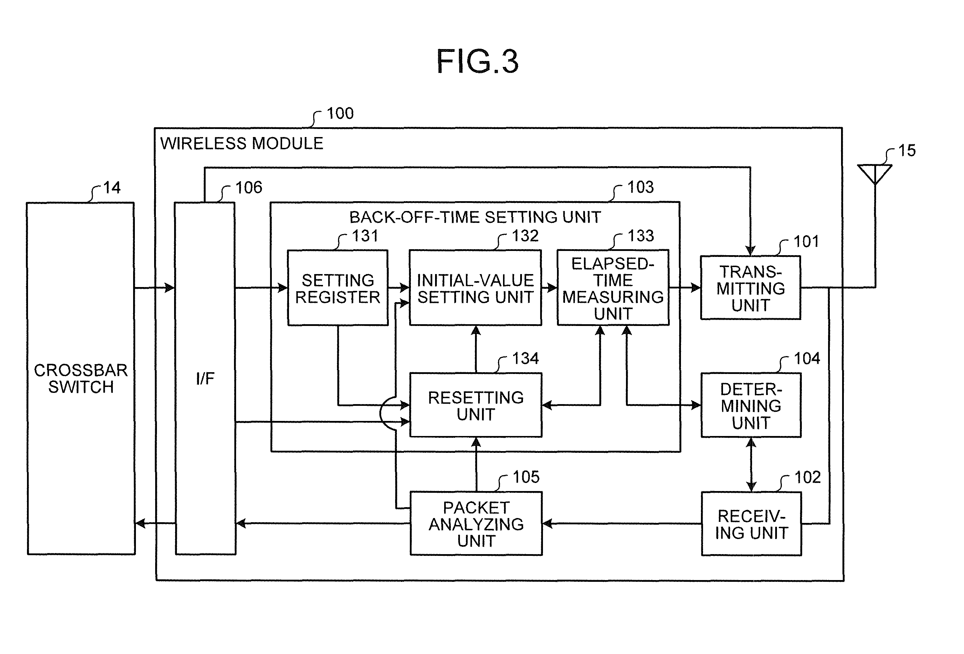

FIG. 3 is a block diagram indicating details of the wireless module. As illustrated in FIG. 3, the wireless module 100 includes a transmitting unit 101, a receiving unit 102, a back-off-time setting unit 103, a determining unit 104, a packet analyzing unit 105, and an interface (I/F) 106.

The I/F 106 functions an interface when the wireless module 100 transmits and receives data to and from the crossbar switch 14. The I/F 106 receives data from the crossbar switch 14. The I/F 106 then transmits the received data to the back-off-time setting unit 103. Moreover, the I/F 106 receives data transmitted from another information processing apparatus from the packet analyzing unit 105. Subsequently, the I/F 106 transmits the received data to the crossbar switch 14.

The transmitting unit 101 receives input of data to be transmitted to another information processing apparatuses from the I/F 106. Upon receiving notification that a back-off time has passed from an elapsed-time measuring unit 133 described later, the transmitting unit 101 transmits the data received from the I/F 106 to the access point 20 through the antenna 15.

The receiving unit 102 receives data transmitted from another information processing apparatus from the access point 20 through the antenna 15. The data transmitted from the other information processing apparatus includes ACK and the like also. The receiving unit 102 outputs the data received from the other information processing apparatus to the packet analyzing unit 105.

Moreover, the receiving unit 102 receives a beacon from the access point 20. The receiving unit 102 outputs the beacon to the packet analyzing unit 105.

Furthermore, the receiving unit 102 performs signal detection in a communication path (channel) to the access point 20. In the following explanation, the channel between the access point 20 and the wireless module 100 is simply called "channel". The receiving unit 102 then outputs a result of the signal detection in the channel to the determining unit 104.

The packet analyzing unit 105 receives a beacon and data from the receiving unit 102. The packet analyzing unit 105 analyzes the received signal.

When the received signal is a beacon, the packet analyzing unit 105 notifies the reception of a beacon to an initial-value setting unit 132 described later.

When the received signal is ACK, the packet analyzing unit 105 notifies the reception of ACK to a resetting unit 134 described later.

The determining unit 104 stores a DIFS period that is a period to determine that it has shifted to an idle state from a point of time when a signal is no longer detected in a channel.

The determining unit 104 receives a result of signal detection in a channel from the receiving unit 102. When it shifts from a state in which a signal is detected to a state in which no signal is detected, the determining unit 104 starts measuring time. When the state in which no signal is detected continues for the period of DIFS after start of measurement of time, the determining unit 104 determines that the channel has shifted to the idle state. In the following explanation, the state of a channel in which a signal is detected is described as "busy". The state that is determined by the determining unit 104 that it has shifted to the idle state corresponds to one example of "communication path is available".

Determining that it has shifted to the idle state, the determining unit 104 outputs notification that the channel is in the idle state to the elapsed-time measuring unit 133 in the back-off-time setting unit 103. Subsequently, the determining unit 104 forwards the result of signal detection in the channel received from the receiving unit 102 to the elapsed-time measuring unit 133.

On the other hand, when detection of a signal is notified before the period of DIFS passes after measurement of time is started, the determining unit 104 determines that the channel has shifted to the busy state, ends the measurement of time, and waits in standby until the channel shifts again to the state in which no signal is detected.

The back-off-time setting unit 103 includes a setting register 131, the initial-value setting unit 132, the elapsed-time measuring unit 133, and the resetting unit 134. The back-off-time setting unit 103 is implemented by a field-programmable gate array (FPGA), for example.

The setting register 131 is a data holding circuit, such as a flip-flop. In the setting register 131, an initial value and a resetting value of the back-off time are stored in advance. The back-off time is standby time from when a channel has become the idle state until the wireless module 100 starts data transmission.

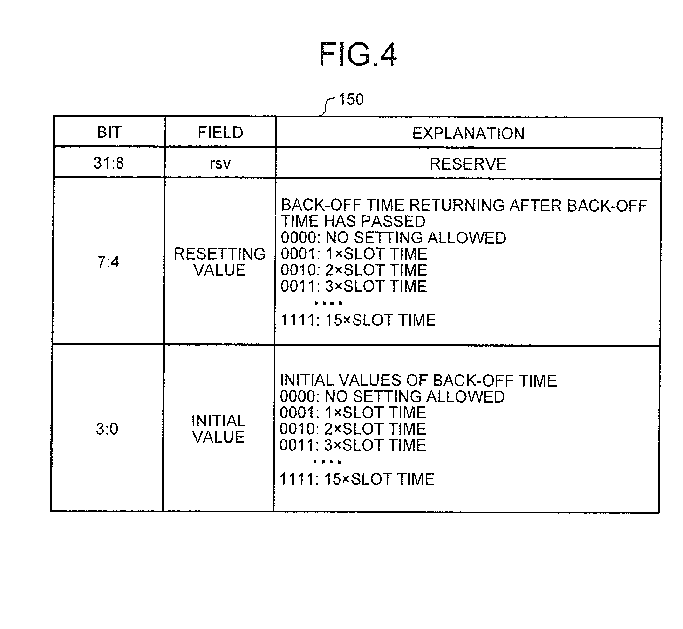

The setting register 131 holds information as illustrated in FIG. 4 as the initial value and the resetting value of the back-off time, for example. FIG. 4 is a table indicating an example of information stored in the setting register according to a first embodiment. A column of bit in a table 150 in FIG. 4 indicates each bit of the setting register 131. Moreover, a column of field in the table 150 indicates information on data stored in the corresponding bit. Furthermore, a column of explanation in the table 150 is for explaining what kind of data each of the stored data is.

In the present embodiment, the setting register 131 has a space of 32 bits. As illustrated in FIG. 4, bit 8 to bit 31 of the setting register 131 are secured as a reserved space, and is not used.

Bit 4 to bit 7 in the setting register 131 are used to store the resetting values. For example, as described in the explanation in the table 150, when bit 4 to bit 7 are "0001", the resetting value is to be a value obtained by multiplying the slot time by 1. Moreover, when bit 4 to bit 7 are "0010", the resetting value is to be a value obtained by multiplying the slot time by 2.

The "slot time" is the smallest unit of the back-off time, and is time requested for transmitting one frame, for example. That is, setting the back-off time to a value obtained by multiplying the slot time by n means that the transmitting unit 101 waits transmission of data in standby until n pieces of the slot time passes from the time when the channel has become idle.

Furthermore, bit 0 to bit 3 in the setting register 131 are used to store the initial values. For example, as described in the explanation in the table 150, when bit 0 to bit 3 are "0001", the initial value is to be a value obtained by multiplying the slot time by 1. Moreover, when bit 0 to bit 3 are "0010", the initial value is to be a value obtained by multiplying the slot time by 2.

While in the present embodiment, information of the resetting values and the initial values are both stored using space of four bits in the setting register 131, if larger values are to be stored, it is only requested to expand a region to be used in the setting register 131.

In the server 10 according to the present embodiment, a different initial value is assigned to each of the wireless modules 100 of the server 10. For example, when there are three units of the servers 10, and three units of the wireless modules 100 are equipped in each of the servers 10, either one out of 1×slot time to 9xslot time is assigned to each of the wireless modules 100 so as to differ from each other. Particularly, as for assignment of the initial values, it is preferable to assign the initial values to the respective servers 10 so that the slot time increases sequentially by 1 each from the assignable shortest time. For example, when the assignable shortest time is 1×slot time, 1×slot time is assigned to one of the servers 10, and back-off times with the slot time increased sequentially by one each are assigned to the other servers 10.

As described, by assigning the shortest time, the standby time after the period of DIFS passes can be reduced. However, if a certain amount of standby time is permissible, the initial values of the respective servers 10 could only differ from each other.

Moreover, in the server 10 according to the present embodiment, the same resetting value is assigned to any of the wireless modules 100. The resetting value in the present embodiment matches with a value obtained by multiplying the total number of the wireless modules 100 connected to the access point 20 by the slot time. For example, when the number of the wireless modules 100 connected to the access point 20 is n, it is preferable that the resetting value of the back-off time be nxslot time. For example, when three units of the servers 10 are connected to the access point 20 and three units of the wireless modules 100 are equipped in each of the servers 10, it is preferable that the resetting value be a value obtained by multiplying the slot time by 9.

By thus setting a value that is obtained by multiplying the number of the wireless modules 100 by the slot time as the resetting value, the standby time following the first communication can be the shortest when values increased sequentially by one slot time each from the shortest time are assigned to the wireless modules 100 as the initial values thereof.

However, if a certain amount of standby time is permissible, the initial values can be values other than these. For example, the shortest initial value is set to 1×slot time or more, and a value to which a predetermined number of slot times are added may be assigned to the wireless module 100 after that. Moreover, if it is not necessary to make the standby time shortest, the resetting values of the back-off time may also be other values as long as the values are longer than the remaining time of the back-off time of the other node at the time when the back-off time is reset in each node.

The initial-value setting unit 132 receives, from the packet analyzing unit 105, notification that a beacon is received. Upon receiving the notification of reception of a beacon, the initial-value setting unit 132 refers to the bit indicating the initial value of the setting register 131 to acquire the initial value. The initial-value setting unit 132 then sets the acquired initial value to the elapsed-time measuring unit 133 as the back-off time.

The resetting unit 134 determines the presence or absence of transmission data, by receiving the same data as data that is transmitted to the transmitting unit 101 by the I/F 106.

When transmission data has not been received by the time back-off time has passed after the channel had shifted to the idle state, the resetting unit 134 acquires a resetting value from the setting register 131. Subsequently, the resetting unit 134 resets the acquired resetting value to the elapsed-time measuring unit 133 as the back-off time.

On the other hand, when transmission data occurs before the back-off time passes after the channel has shifted to the idle state, the resetting unit 134 waits for notification of reception of ACK from the packet analyzing unit 105. When the notification of reception of ACK is received from the packet analyzing unit 105, the resetting unit 134 acquires a resetting value from the setting register 131. Subsequently, the resetting unit 134 resets the acquired resetting value to the elapsed-time measuring unit 133 as the back-off time.

The elapsed-time measuring unit 133 has a counter. Receiving the input of the initial value of the back-off time from the initial-value setting unit 132, the elapsed-time measuring unit 133 sets the initial value at the counter.

Subsequently, the elapsed-time measuring unit 133 receives notification that the channel is in the idle state from the determining unit 104. The elapsed-time measuring unit 133 counts down until the counter to which the initial value has been set becomes zero. When the counter becomes zero, the elapsed-time measuring unit 133 notifies the transmitting unit 101 of elapse of the back-off time. Moreover, the elapsed-time measuring unit 133 notifies the resetting unit 134 of elapse of the back-off time.

Thereafter, receiving input of a resetting value of the back-off time from the resetting unit 134, the elapsed-time measuring unit 133 sets the counter to the resetting value. Upon receiving the notification that the channel is in the idle state from the determining unit 104, the elapsed-time measuring unit 133 starts counting down the resetting value. The elapsed-time measuring unit 133 counts down until the counter to which the resetting value is set becomes zero. When the counter becomes zero, the elapsed-time measuring unit 133 notifies the transmitting unit 101 of elapse of the back-off time.

Subsequently, receiving input of a resetting value of the back-off time from the resetting unit 134, the elapsed-time measuring unit 133 sets again the counter to the resetting value. The elapsed-time measuring unit 133 repeats setting of resetting values, counting time, and notifying elapse of the back-off time described above.

However, the elapsed-time measuring unit 133 stops counting down, when notification that the channel has become busy is received from the determining unit 104 during the countdown. While maintaining the back-off time before the stop of countdown, the elapsed-time measuring unit 133 waits in standby until notification that the channel is in the idle state is received from the determining unit 104. Subsequently, the elapsed-time measuring unit 133 resumes countdown of the back-off time starting from the value before the stop of countdown.

Avoidance of contention of communication by the back-off time in the wireless module 100 according to the present embodiment is explained.

As described above, in the present embodiment, the initial values are assigned such that the respective wireless modules 100 have different initial values from each other. Therefore, the initial values set by the elapsed-time measuring unit 133 at first differ from each other in the respective wireless modules 100. In other words, the back-off times of the wireless modules 100 are not finished in the same timing with the initial values. Accordingly, contention does not occur in the communication using the initial values of back-off time. Particularly, in the present embodiment, the initial values of back-off time is assigned such that the minimum value of 1×slot time is assigned to one of the servers 10 as the initial value of the back-off time, and initial values obtained by increasing the slot time sequentially by one each are assigned to the other servers 10. In this case, the server 10 to which 1×slot time is assigned as the initial value performs communication first, and the other servers 10 carries over the initial values under countdown.

Furthermore, in the present embodiment, the resetting value is the number of the wireless module 100xslot time. Accordingly, the back-off times of the respective wireless modules 100 always differ from each other, and contention of communication of the wireless modules 100 does not occur.

The transmitting unit 101 receives data to be transmitted to another information processing apparatus from the I/F 106. Upon receiving notification of elapse of the back-off time from the elapsed-time measuring unit 133, the transmitting unit 101 transmits the data received from the I/F 106 to the access point 20. If there is no data to transmit when the notification of elapse of the back-off time is received, the transmitting unit 101 waits in standby without performing data transmission.

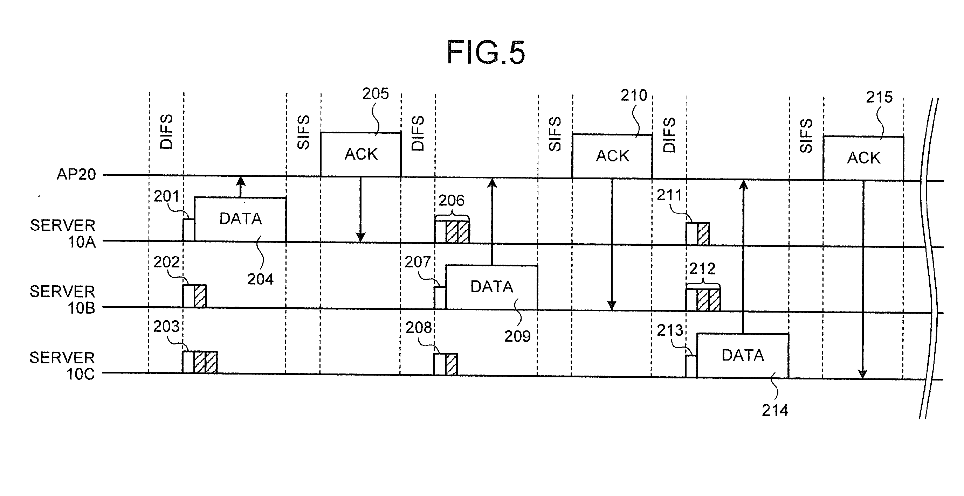

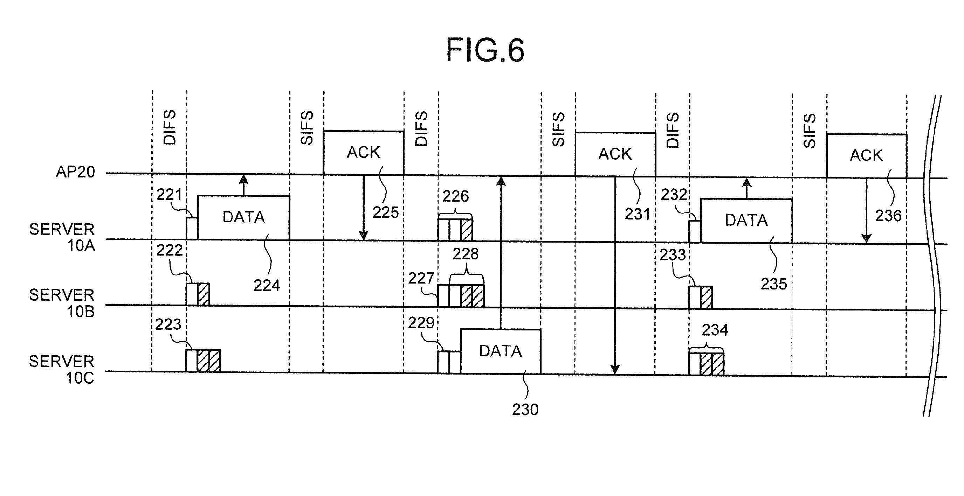

Next, an overall flow of communication in the information processing system according to the present embodiment is explained with reference to FIG. 5 and FIG. 6. FIG. 5 is a sequence diagram indicating communication when all of the servers have transmission data in the first embodiment. FIG. 6 is a sequence diagram indicating communication when a server having no transmission data is included in the first embodiment. In this example, explanation is given in a case in which servers 10A to 10C are present as the servers 10. Moreover, one unit of the wireless module 100 is mounted in each of the servers 10A to 10C.

A case in which all the servers have transmission data is explained with reference to FIG. 5. The initial value of the back-off time of the server 10A is 1×slot time. Furthermore, the initial value of the back-off time of the server 10B is 2xslot time. Moreover, the initial value of the back-off time of the server 10C is 3xslot time. Furthermore, the resetting value of the back-off time of the servers 10A to 10C is 3xslot time.

The servers 10A to 10C wait in standby for the DIFS period after the channel has shifted from the busy state. If the channel does not become busy while waiting in standby, the servers 10A to 10C set the initial value of the back-off time in the respective elapsed-time measuring units 133. Specifically, the initial-value setting unit 132 of the server 10A sets the initial value of the back-off time expressed by a period 201 in the elapsed-time measuring unit 133. One small rectangle indicated by the period 201 expresses one slot time. The initial-value setting unit 132 of the server 10B sets the initial value of the back-off time expressed by a period 202 in the elapsed-time measuring unit 133. The initial-value setting unit 132 of the server 10C sets the initial value of the back-off time expressed by a period 203 in the elapsed-time measuring unit 133.

In this state, the back-off time of the server 10A is the shortest. Therefore, when the elapsed-time measuring unit 133 of the server 10A determines that the back-off time has passed, the transmitting unit 101 of the server 10A transmits data 204 to the access point 20. At this time, a shaded area of the period 202 and a shaded area of the period 203 are carried over to following measurement of elapsed time as the back-off times of the servers 10B and 10C, respectively. A period expressed in shade with diagonal lines in each of the back-off times in FIG. 5 is a period to be carried over to next measurement of elapsed time. That is, the elapsed-time measuring unit 133 of the server 10B carries over 1×slot time to next measurement of elapsed time. Moreover, the elapsed-time measuring unit 133 of the server 10C carries over 2xslot time to next measurement of elapsed time.

The access point 20 receives the data 204. Subsequently, the access point 20 transmits ACK 205 to the server 10A, if the channel does not become busy after waiting for the SIFS period in standby. The SIFS period is set short compared with the DIFS period. Accordingly, the access point 20 can return a response of ACK before the server 10B or 10C transmits data.

The receiving unit 102 of the server 10A receives ACK 205 from the access point 20. The packet analyzing unit 105 of the server 10A notifies the resetting unit 134 of reception of ACK 205. The resetting unit 134 of the server 10A resets a period 206 of 3xslot time, which is the resetting value, to the elapsed-time measuring unit 133. A period having a range indicated by a brace in FIG. 5 is a resetting period.

In this case, the elapsed-time measuring unit 133 of the server 10B sets a period 207 that is a carried over period, 1×slot time, as the back-off time. Moreover, the elapsed-time measuring unit 133 of the server 10C sets a period 208 that is a carried over period, 2xslot time, as the back-off time.

In this state, the back-off time of the server 10B is the shortest. Therefore, when it is determined that the back-off time has passed by the elapsed-time measuring unit 133 of the server 10B, the transmitting unit 101 of the server 10B transmits data 209 to the access point 20. At this time, a shaded area of the period 206 and a shaded area of the period 208 are carried over to following measurement of elapsed time as the back-off times of the servers 10A and 10C, respectively.

The access point 20 receives the data 209. Subsequently, the access point 20 transmits ACK 210 to the server 10B, if the channel does not become busy after waiting for the SIFS period in standby.

The receiving unit 102 of the server 10B receives ACK 210 from the access point 20. The packet analyzing unit 105 of the server 10B then notifies the resetting unit 134 of reception of ACK 210. The resetting unit 134 of the server 10B resets a period 212 of 3xslot time, which is the resetting value, to the elapsed-time measuring unit 133.

In this case, the elapsed-time measuring unit 133 of the server 10A sets a period 211 that is a carried over period, 2xslot time, as the back-off time. Moreover, the elapsed-time measuring unit 133 of the server 10C sets a period 213 that is a carried over period, 1×slot time, as the back-off time.

In this state, the back-off time of the server 10C is the shortest. Therefore, when the elapsed-time measuring unit 133 of the server 10C determines that the back-off time has passed, the transmitting unit 101 of the server 10C transmits data 214 to the access point 20. At this time, a shaded area of the period 211 and a shaded area of the period 212 are carried over to following measurement of elapsed time as the back-off times of the servers 10A and 10B, respectively.

The access point 20 receives the data 214. Subsequently, the access point 20 transmits ACK 215 to the server 10C, if the channel does not become busy after waiting for the SIFS period in standby.

Next, a case in which a server having no transmission data is included is explained with reference to FIG. 6. In this case also, the initial values and the resetting values of the servers 10A to 10C are the same as the case in FIG. 5.

The servers 10A to 10B wait for the DIFS period in standby after the channel has shifted from the busy state. If the channel does not become busy while waiting in standby, the servers 10A to 10B set periods 221, 222 and 223 that are the initial values of the back-off time in the respective elapsed-time measuring units 133.

In this state, the back-off time of the server 10A is the shortest. Therefore, when the elapsed-time measuring unit 133 of the server 10A determines that the back-off time has passed, the transmitting unit 101 of the server 10A transmits data 224 to the access point 20. At this time, a shaded area of the period 222 and a shaded area of the period 223 are carried over to following measurement of elapsed time as the back-off times of the servers 10B and 10C, respectively.

The access point 20 receives the data 224. Subsequently, the access point 20 transmits ACK 225 to the server 10A, if the channel does not become busy after waiting for the SIFS period in standby.

The receiving unit 102 of the server 10A receives ACK 225 from the access point 20. The packet analyzing unit 105 of the server 10A notifies the resetting unit 134 of reception of ACK 225. The resetting unit 134 of the server 10A resets a period 226 of 3xslot time, which is the resetting value, to the elapsed-time measuring unit 133.

In this case, the elapsed-time measuring unit 133 of the server 10B sets a period 227 of 1×slot time that is a carried over period as the back-off time. Moreover, the elapsed-time measuring unit 133 of the server 10C sets a period 229 that is a carried over period, 2xslot time, as the back-off time.

In this state, the back-off time of the server 10B is the shortest. Accordingly, the elapsed-time measuring unit 133 of the server 10B determines that the back-off time has passed first. However, the server 10B has no transmission data. Therefore, the resetting unit 134 of the server 10B resets a period 228 of 3xslot time, which is the resetting value, in the elapsed-time measuring unit 133.

In this case, because there is no data transmission from the server 10B, the channel does not become busy. Therefore, the elapsed-time measuring unit 133 of the servers 10C and 10A continue measurement of elapse of the back-off time. Moreover, the elapsed-time measuring unit 133 of the server 10B also continues measurement of elapse of the reset back-off time.

In this case, because the second shortest back-off time is one of the server 10C, the elapsed-time measuring unit 133 of the server 10C determines that the back-off time has passed next. The transmitting unit 101 of the server 10C then transmits data 230 to the access point 20. At this time, a shaded area of the period 226 and a shaded area of the period 228 are carried over to following measurement of elapsed time as the back-off times of the servers 10A and 10B, respectively.

The access point 20 receives the data 230. Subsequently, the access point 20 transmits ACK 231 to the server 10C, if the channel does not become busy after waiting for the SIFS period in standby.

The receiving unit 102 of the server 10C receives ACK 231 from the access point 20. The packet analyzing unit 105 of the server 10C notifies the resetting unit 134 reception of ACK 231. The resetting unit 134 of the server 10C resets a period 234 of 3xslot time, which is the resetting value, to the elapsed-time measuring unit 133.

In this case, the elapsed-time measuring unit 133 of the server 10A sets a period 232 that is a carried over period, 1×slot time, as the back-off time. Moreover, the elapsed-time measuring unit 133 of the server 10B sets a period 233 that is a carried over period, 2xslot time, as the back-off time.

In this state, the back-off time of the server 10A is the shortest. Therefore, when the elapsed-time measuring unit 133 of the server 10A determines that the back-off time has passed, the transmitting unit 101 of the server 10A transmits data 235 to the access point 20. At this time, a shaded area of the period 233 and a shaded area of the period 234 are carried over to following measurement of elapsed time as the back-off times of the servers 10B and 10C, respectively.

The access point 20 receives the data 235. Subsequently, the access point 20 transmits ACK 236 to the server 10A, if the channel does not become busy after waiting for the SIFS period in standby.

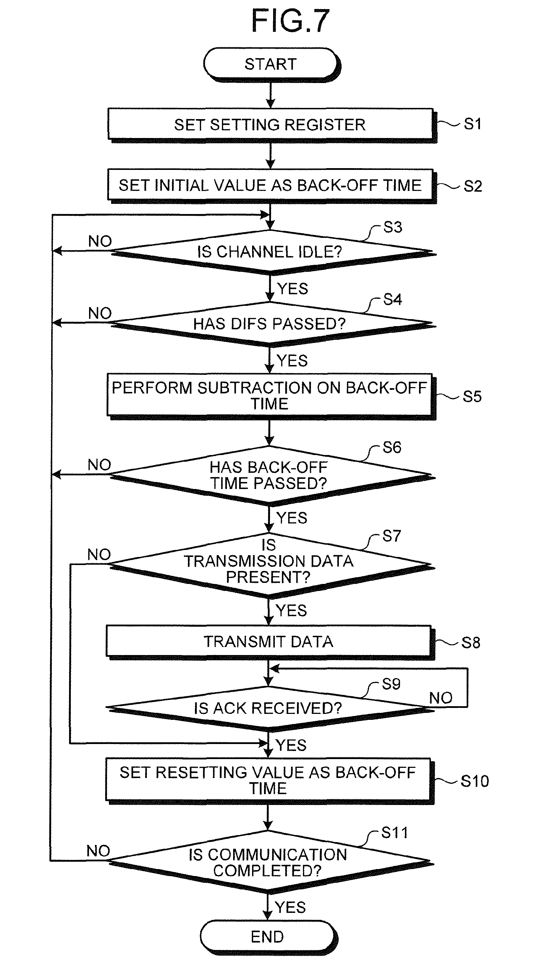

Next, a flow of the wireless-communication processing in the wireless module 100 according to the present embodiment is explained with reference to FIG. 7. FIG. 7 is a flowchart of a wireless-communication processing in the wireless module according to the first embodiment.

An initial value and a setting value are set in the setting register 131 (step S1).

When a channel shifts to a state in which no signal is detected from a busy state and then the SIFS period passes without the channel shifting to the busy state, the initial-value setting unit 132 acquires an initial value of the back-off time from the setting register 131. The initial-value setting unit 132 sets the initial value in the elapsed-time measuring unit 133 as the back-off time (step S2).

The determining unit 104 determines whether the channel is an idle state (step S3). When the channel is not in an idle state (step S3: NO), it is waited in standby until the channel becomes idle.

On the other hand, when the channel is in an idle state (step S3: YES), the determining unit 104 determines whether the DIFS period has passed (step S4). When the DIFS period has not passed (step S4: NO), the determining unit 104 goes back to step S3.

On the other hand, when the DIFS period has passed (step S4: YES), the determining unit 104 notifies the elapsed-time measuring unit 133 of elapse of the DIFS period. In response to the notification of elapse of the DIFS period, the elapsed-time measuring unit 133 performs subtraction on the back-off time to measure elapsed time of the back-off time (step S5).

The elapsed-time measuring unit 133 determines whether the back-off time has passed (step S6). When the back-off time has not passed (step S6: NO), the wireless module 100 goes back to step S3.

On the other hand, when the back-off time has passed (step S6: YES), the resetting unit 134 determines whether transmission data is present (step S7). When no transmission data is present (step S7: NO), the resetting unit 134 proceeds to step S10.

On the other hand, when transmission data is present (step S7: YES), the transmitting unit 101 transmits data to the access point 20 (step S8).

Subsequently, the resetting unit 134 determines whether ACK is received (step S9). When ACK is not received (step S9: NO), the resetting unit 134 waits in standby until ACK is received.

When no transmission data is present (step S7: NO), or when ACK is received (step S9: YES), the resetting unit 134 acquires a resetting value of back-off time from the setting register 131. The resetting unit 134 then sets the resetting value in the elapsed-time measuring unit 133 as back-off time (step S10).

The back-off-time setting unit 103 determines whether communication is completed (step S11). When the communication is not completed (step S11: NO), the back-off-time setting unit 103 goes back to step S3.

On the other hand, when communication is completed (step S11: YES), the wireless module 100 ends the wireless communication processing.

As explained above, in the information processing apparatus according to the present embodiment, setting one slot time as the minimum value, and values obtained by increasing therefrom by one slot time each are assigned to respective wireless modules as the initial values of back-off time. Furthermore, the total number of the wireless modules is assigned to each of the wireless modules as a resetting value. Accordingly, the information processing apparatus according to the present embodiment can reduce standby time after a channel becomes idle, and can suppress occurrence of contention in communication.

Moreover, in the present embodiment, initial values and resetting values are selected so that standby time is to be the shortest. However, when there is allowance in standby time, the initial values could only be set so as not to overlap among the wireless modules, and the resetting values could only take a value longer than remaining back-off times of other wireless modules when resetting is performed in any of the wireless modules. Also when the initial values and the resetting values are thus set, occurrence of contention of communication can be suppressed.

[b] Second Embodiment

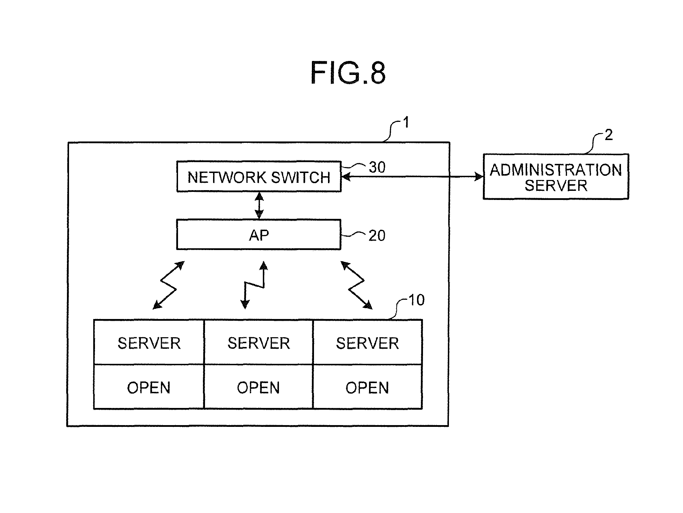

FIG. 8 is a configuration diagram illustrating another example of the information processing system. An information processing system according to the present embodiment differs in that each of the servers 10 is managed by an administration server 2 from the first embodiment. The server 10 according to the present embodiment is also indicated by the block diagram in FIG. 2. Moreover, the wireless module 100 according to the present embodiment is also indicated by the block diagram in FIG. 3. In the following, explanation of operation of respective components similar to that of the first embodiment is omitted.

In the information processing system according to the present embodiment, more than one unit of the server 10, the access point 20, and a network switch 30 are mounted in the rack 1. Moreover, the information processing system according to the present embodiment includes the administration server 2.

The administration server 2 is connected to the network switch 30. Moreover, the access point 20 is connected to the network switch 30.

The administration server 2 communicates with the servers 10 through the access point 20 and the network switch 30.

The administration server 2 notifies initial values and resetting values of the back-off time to the servers 10 through the network switch 30 and the access point 20. The administration server 2 controls the setting register 131 of the server 10 to store the initial values and setting values of the back-off time. In the following explanation, setting of the initial values and the resetting values by the administration server 2 may be collectively called "back-off time setting". The administration server 2 performs back-off time setting for each of the servers 10. For example, the administration server 2 performs back-off time setting for one of the servers 10, and thereafter, in response to reception of ACK replied from the server 10, performs back-off time setting for a next one of the servers 10.

Although the administration server 2 is arranged externally from the rack 1 in the present embodiment, the administration server 2 may be mounted in the rack 1.

The access point 20 transmits a beacon to each of the servers 10 at appropriate timing, after the back-off time is set in all of the servers 10 connected to the access point 20.

The receiving unit 102 of each of the servers 10 receives a back-off time setting from the administration server 2. The receiving unit 102 transmits the back-off time setting to the CPU 11 through the packet analyzing unit 105, the I/F 106, and the crossbar switch 14.

The CPU 11 acquires the initial value and the resetting value that are designated by the back-off time setting, to store in the setting register 131. Furthermore, the CPU 11 instructs the transmitting unit 101 to transmit ACK.

The transmitting unit 101 receives instruction to transmit ACK from the CPU 11. The transmitting unit 101 then returns ACK to the administration server 2, after waiting for the SIFS period in standby.

Subsequently, each of the servers 10 starts data transmission processing after receiving a beacon.

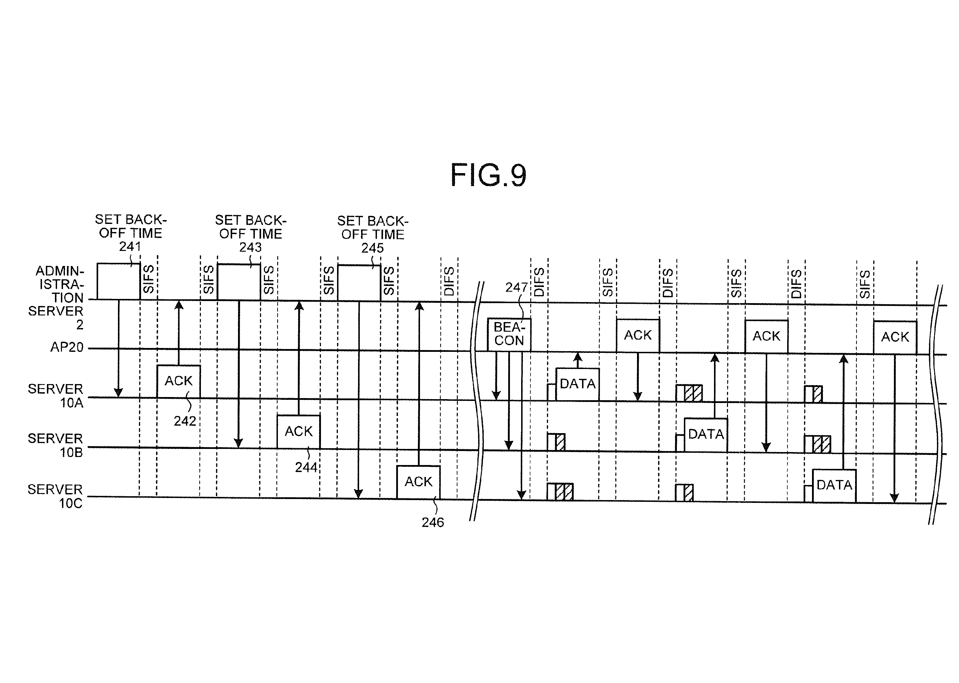

Next, an overall flow of communication in the information processing system according to the present embodiment is explained with reference to FIG. 9. FIG. 9 is a sequence diagram indicating communication in the information processing system according to the second embodiment. Here, a case in which the servers 10A to 10C are present as the servers 10 is explained. Moreover, one unit of the wireless module 100 is mounted in each of the servers 10A to 10C.

When operation of the information system is started, the administration server 2 transmits a back-off time setting 241 to the server 10A. The back-off time setting 241 indicates that the initial value of back-off time is 1×slot time, and the resetting value is 3×slot time.

The server 10A receives the back-off time setting 241 from the administration server 2, and stores in the setting register 131. Specifically, the server 10A receives a back-off time setting at the receiving unit 102. The receiving unit 102 transmits the back-off time setting 241 to the CPU 11 through the packet analyzing unit 105, the I/F 106, and the crossbar switch 14. The CPU 11 acquires the initial value and the resetting value that are designated in the back-off time setting, to store in the setting register 131. The transmitting unit 101 of the server 10A returns ACK 242 to the administration server 2, after waiting for the SIFS period in standby.

The administration server 2 waits for the SIFS period in standby after receiving ACK 242, and then transmits a back-off time setting 243 to the server 10B. The back-off time setting 243 indicates that the initial value of back-off time is 2xslot time, and the resetting value is 3xslot time.

The server 10B receives the back-off time setting 243 from the administration server 2, and stores in the setting register 131. The server 10B returns ACK 244 to the administration server 2 after waiting for the SIFS period in standby.

The administration server 2 waits for the SIFS period in standby after receiving ACK 244, and then transmits a back-off time setting 245 to the server 10C. The back-off time setting 245 indicates that the initial value of back-off time is 3xslot time, and the resetting value is 3xslot time.

The server 10C receives the back-off time setting 245 from the administration server 2, and stores in the setting register 131. The server 10C returns ACK 246 to the administration server 2 after waiting for the SIFS period in standby.

After setting of the back-off time by the administration server 2 is completed in all of the servers 10A to 10C, the access point 20 waits for the DIFS period in standby, and then transmits a beacon 247 to each of the servers 10A to 10C at appropriate timing. Upon receiving the beacon 247 from the access point 20, the servers 10A to 10C wait for the DIFS period in standby after detecting that the channel is not busy, and then perform wireless communication processing confirming that the channel is in an idle state.

Because the remainder of the wireless communication processing indicated in FIG. 9 is the same as that of the first embodiment, explanation thereof is omitted. Although a case in which all of the servers 10 have transmission data similarly to FIG. 5 is indicated in FIG. 9, this is one example of communication. For example, when the server 10 having no transmission data is included, the wireless communication processing after the servers 10A to 10C receive the beacon 247 in FIG. 9 is as the wireless communication processing indicated in FIG. 6.

As explained above, the information processing apparatus according to the present embodiment acquires an initial value and a resetting value of the back-off time from an administration unit, and performs communication using the initial value and the resetting value acquired. With such a configuration that the administration unit manages initial values and resetting values of respective nodes in a consolidated manner, when the number of the information processing apparatuses or the wireless modules, that is the number of nodes is changed, the administration unit can change an initial value and a resetting value promptly according to the change in the number of nodes. That is, also when change in the number of nodes occurs, reduction of standby time after a channel shifts to an idle state, and suppression of access contention can be appropriately achieved.

[c] Third Embodiment

Next, a third embodiment is explained. The servers 10 and the wireless modules 100 that are the information processing apparatuses according to the present embodiment change a traffic amount according to a transmission rate of each, and in that point, differ from those in the first embodiment. The server 10 according to the present embodiment is also indicated by the block diagram in FIG. 2. Moreover, the wireless module 100 according to the present embodiment is also indicated by the block diagram in FIG. 3. In the following explanation, explanation of respective components that perform similar operation as that of the first embodiment is omitted.

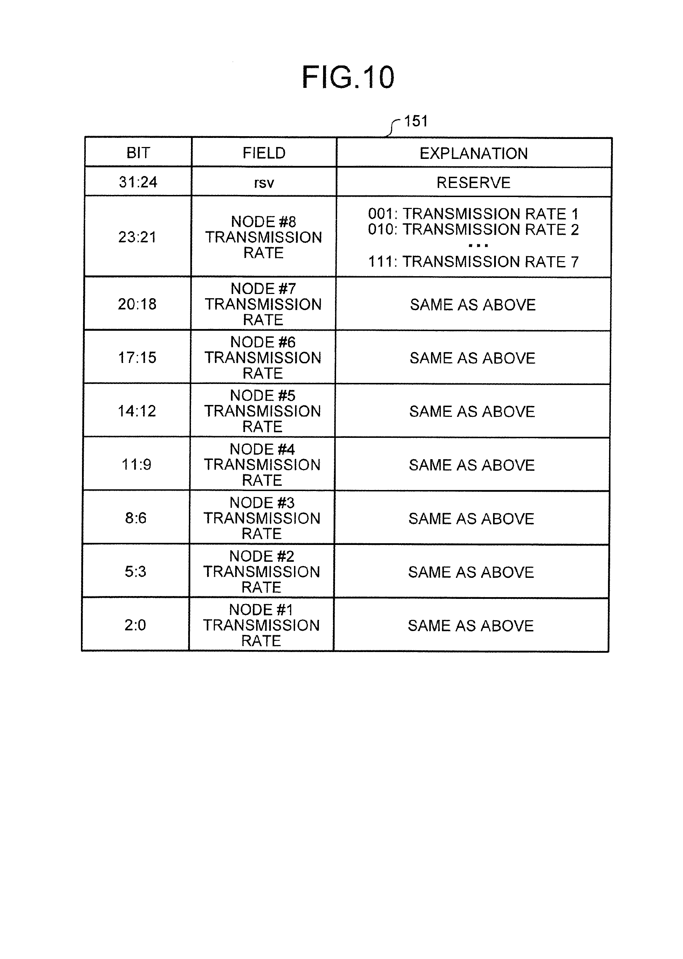

The setting register 131 according to the present embodiment holds information as illustrated in FIG. 10 as initial values and resetting values of back-off time, for example. FIG. 10 is a table indicating an example of the information stored in a setting register according to the third embodiment. The column of bit in a table 151 in FIG. 10 indicates each bit of the setting register 131. Moreover, the column of field in the table 151 indicates information on data stored in the corresponding bit. Furthermore, the column of explanation in the table 151 is for explaining what kind of data each of the stored data is. The table 151 is described taking a case in which eight units of the wireless modules 100 are connected to the access point 20 as an example.

Bit 24 to bit 31 of the setting register 131 are left as a reserved space. Moreover, in bit 21 to bit 23 of the setting register 131, the transmission rate of node #8 is stored. Furthermore, in bit 18 to bit 20 of the setting register 131, the transmission rate of node #7 is stored. Moreover, in bit 15 to bit 17 of the setting register 131, the transmission rate of node #6 is stored. Furthermore, in bit 12 to bit 14 of the setting register 131, the transmission rate of node #5 is stored. Moreover, in bit 9 to bit 11 of the setting register 131, the transmission rate of node #4 is stored. Furthermore, in bit 6 to bit 8 of the setting register 131, the transmission rate of node #3 is stored. Moreover, in bit 3 to bit 5 of the setting register 131, the transmission rate of node #2 is stored. Furthermore, in bit 0 to bit 2 of the setting register 131, the transmission rate of node #1 is stored.

Nodes #1 to #8 indicate the wireless modules 100 that have the respective numerics as node numbers. The node number is assigned to each of the wireless modules 100 in advance.

The transmission rate is indicated by three bits of the setting register 131 as indicated in FIG. 10 in the present embodiment. For example, values from 1 to 7 can be expressed as a transmission rate such that when a bit string is 001, the transmission rate is 1, and when a bit string 010, the transmission rate is 2, or the like. The transmission rate is a rate that expresses a value of a transmission rate in ratio. For example, when the transmission rate is 2, communication is performed in an amount twice as much as a case in which the transmission rate is 1. Moreover, when the transmission rate is 7, communication is performed in an amount seven times as much as a case in which the transmission rate is 1. In the present embodiment, it is set such that the transmission rate of node #1 is 1.

The wireless module 100 to which I (I=1, 2, 3, 4, ...) is assigned as the node number is explained as "node #I."

The initial-value setting unit 132 acquires the transmission rate corresponding to each node number from the setting register 131. When I=1, that is, in the case of node #1, the initial-value setting unit 132 sets an initial value to $1 \times$slot time. Moreover, when I is 2 or larger, the initial-value setting unit 132 of node #I divides the initial value of the node #(I-1) by slot time, and sets a value obtained by multiplying a sum of a result of division and the transmission rate of node #(I-1) by the slot time, to the initial value. That is, the initial value I of node #I is expressed by following equation (1).

$$\begin{cases} \text{initial value } I = 1 \times \text{slot time} \quad (I = 1) \\ \text{initial value } I = \{ \text{initial value of node} \# (I-1)/\text{slot time} + \text{transmission rate of node} \# (I-1) \} \times \text{slot time} \quad (I \geq 2) \end{cases}$$

$$(1)$$

Upon receiving a beacon from the access point 20, the initial-value setting unit 132 of each of the wireless modules 100 sets the determined initial value in the elapsed-time measuring unit 133 as the back-off time.

The resetting unit 134 acquires the transmission rate corresponding to each node number from the setting register 131. Next, the resetting unit 134 of node #I sums the transmission rates of the respective nodes, subtracts a value obtained by subtracting 1 from the transmission rate of the node #I of itself from the sum, and sets a value obtained by multiplying the result of subtraction by the slot time, to the resetting value. That is, a resetting value I of node #I is expressed by following equation (2).

$$resetting\ value\ I =$$
$$\left\{\sum_{k=1}^{n}(\text{transmission rate of node}\ \#\text{k})-(\text{transmission rate of node}\ \#1)\right\}\times\text{slot time} \qquad (2)$$

When the back-off time has passed, the resetting unit 134 determines whether transmission data is present. When no transmission data is present, the resetting unit 134 immediately performs following resetting processing of the back-off time. On the other hand, when transmission data is present, the resetting unit 134 waits for reception of ACK from the access point 20, and performs the following resetting processing of the back-off time.

The resetting processing performed by the resetting unit 134 is explained. The resetting unit 134 determines whether communication is performed successively for the number of times according to the transmission rate of the node of itself. The number of times according to the transmission rate of the node of itself is, for example, a value of the transmission rate of the node of itself. For example, when the transmission rate of the node of itself is 3, the number of times according to the transmission rate of the node of itself is three times. That is, in this case, the resetting unit 134 determines whether communication is performed three time successively.

When communication is not performed successively for the number of times according to the transmission rate of the node of itself, the resetting unit 134 sets 1×slot time in the elapsed-time measuring unit 133. That is, the resetting unit 134 repeats setting 1×slot time in the elapsed-time measuring unit 133 until communication is performed for the number of times corresponding to the value of the transmission rate, that is for the number of times corresponding to a value obtained by subtracting 1 from the value of the transmission rate. For example, when the transmission rate is 3, the resetting unit 134 sets 1×slot time twice in the elapsed-time measuring unit 133 after the initial value of the back-off time has passed and communication is performed.

When communication is performed successively for the number of times corresponding to the value of the transmission rate, the resetting unit 134 sets the resetting value calculated using equation (2) in the elapsed-time measuring unit 133 as the back-off time.

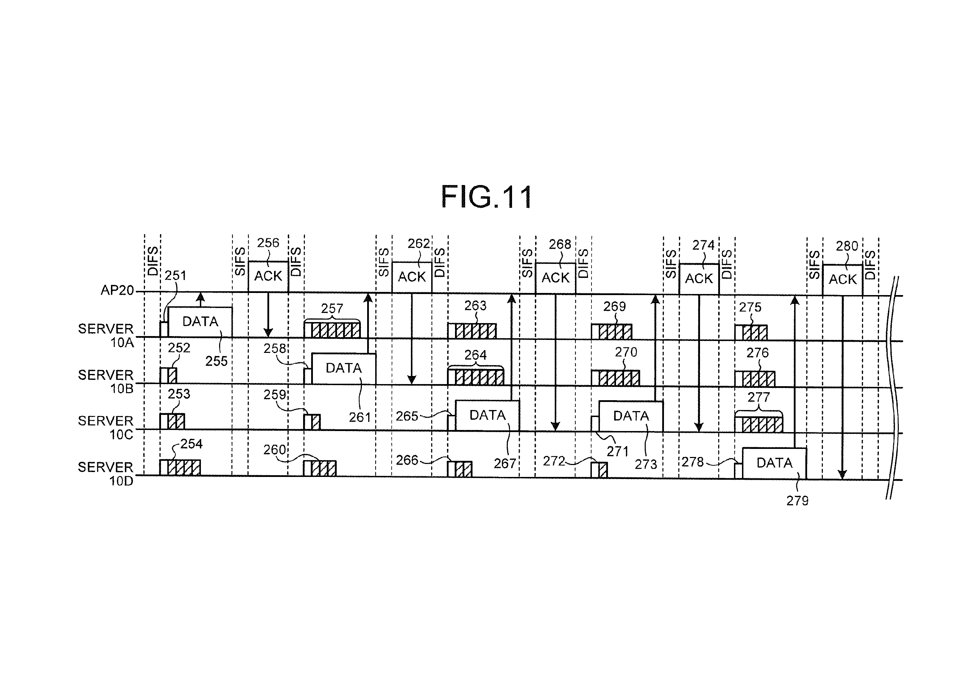

Next, an overall flow of communication in the information processing system according to the present embodiment is explained with reference to FIG. 11. FIG. 11 is a sequence diagram indicating communication in the information processing system according to the third embodiment. Here, a case in which servers 10A to 10D are present as the servers 10 is explained. Moreover, one unit of the wireless module 100 is mounted in each of the servers 10A to 10D. That is, because the servers 10A to 10D and the wireless modules 100 are arranged in one-to-one correspondence, each of the servers 10A to 10D is explained as one node. Moreover, a case in which all of the servers 10A to 10D have transmission data is explained here.

The node number of the server 10A is 1, the node number of the server 10B is 2, the node number of the server 10C is 3, and the node number of the server 10D is 4.

The transmission rate of the servers 10A and 10B is 1, the transmission rate of the server 10C is 2, and the transmission rate of the server 10D is 3.

Because the server 10A is node #1, the initial-value setting unit 132 of the server 10A sets the initial value to 1×slot time based on equation (1).

Furthermore, the initial-value setting unit 132 of the server 10B calculates an initial value based on the equation (1) by adding the transmission rate (=1) of node #1 to a value (=1) obtained by dividing the initial value of node #1 by the slot time, and multiplying the result of addition by the slot time. That is, the initial-value setting unit 132 of the server 10B sets 2xslot time to the initial value.

Moreover, the initial-value setting unit 132 of the server 10C calculates an initial value based on the equation (1) by adding the transmission rate (=1) of node #2 to a value (=2) obtained by dividing the initial value of node #2 by the slot time, and multiplying the result of addition by the slot time. That is, the initial-value setting unit 132 of the server 10C sets 3xslot time to the initial value.

Furthermore, the initial-value setting unit 132 of the server 10D calculates an initial value based on the equation (1) by adding the transmission rate (=2) of node #3 to a value (=3) obtained by dividing the initial value of node #3 by the slot time, and multiplying the result of addition by the slot time. That is, the initial-value setting unit 132 of the server 10D sets 5xslot time to the initial value.

The servers 10A to 10D wait for the DIFS period in standby after the channel has shifted from the busy state. If the channel does not become busy while waiting in standby, the servers 10A to 10D set the initial value of the back-off time in the respective elapsed-time measuring units 133.

Specifically, the initial-value setting unit 132 of the server 10A sets the initial value of the back-off time expressed by a period 251, that is 1×slot time, in the elapsed-time measuring unit 133 as the back-off time. The initial-value setting unit 132 of the server 10B sets the initial value of the back-off time expressed by a period 252, that is 2xslot time, in the elapsed-time measuring unit 133 as the back-off time. The initial-value setting unit 132 of the server 10C sets the initial value of the back-off time expressed by a period 253, that is 3xslot time, in the elapsed-time measuring unit 133 as the back-off time. The initial-value setting unit 132 of the server 10D sets the initial value of the back-off time expressed by a period 254, that is 5xslot time, in the elapsed-time measuring unit 133 as the back-off time.

In this state, the back-off time of the server 10A is the shortest. Therefore, when the elapsed-time measuring unit 133 of the server 10A determines that the back-off time has passed, the transmitting unit 101 of the server 10A transmits data 255 to the access point 20. At this time, shaded areas of the periods 252, 253, and 254 are carried over to following measurement of elapsed time as the back-off times of the servers 10B and 10D, respectively. That is, the elapsed-time measuring unit 133 of the server 10B carries over 1×slot time to next measurement of elapsed time. Moreover, the elapsed-time measuring unit 133 of the server 10C carries over 2xslot time to next measurement of elapsed time. Furthermore, the elapsed-time measuring unit 133 of the server 10D carries over 4xslot time to next measurement of elapsed time.

The access point 20 receives the data 255. Subsequently, the access point 20 transmits ACK 256 to the server 10A, if the channel does not become busy after waiting for the SIFS period in standby.

The receiving unit 102 of the server 10A receives ACK 256 from the access point 20. The packet analyzing unit 105 of the server 10A notifies the resetting unit 134 of reception of ACK 256.

The resetting unit 134 of server 10A acquires the transmission rate of each node from the setting register 131, and calculates a resetting value using equation (2). Specifically, the resetting unit 134 acquires a sum of the transmission rates of the respective node. In this example, the sum of the transmission rates of the respective nodes is 7. Next, the resetting unit 134 subtracts a value obtained by subtracting 1 from the transmission rate of the node of itself from the sum of the transmission rates. In this example, because the transmission rate of the server 10A is 1, a value that is obtained by subtracting the value obtained by subtracting 1 from the transmission rate of the node of itself from the sum of the transmission rates is 7. Subsequently, the resetting unit 134 calculates a resetting value by multiplying the calculated value by the slot time. That is, the resetting unit 134 of the server 10A calculates 7xslot time as the resetting value.

The resetting unit 134 of the server 10A resets a period 257 of 7xslot time, which is the resetting value, in the elapsed-time measuring unit 133 as the back-off time.

In this case, the elapsed-time measuring unit 133 of the server 10B sets a period 258 that is the carried over period of 1×slot time, as the back-off time. Moreover, the elapsed-time measuring unit 133 of the server 10C sets a period 259 that is the carried over period of 2xslot time, as the back-off time. Furthermore, the elapsed-time measuring unit 133 of the server 10D sets a period 260 that is the carried over period of 4xslot time, as the back-off time.

In this state, the back-off time of the server 10B is the shortest. Therefore, when the elapsed-time measuring unit 133 of the server 10B determines that the back-off time has passed, the transmitting unit 101 of the server 10B transmits data 261 to the access point 20. At this time, shaded areas of the periods 257, 259, and 260 are carried over to following measurement of elapsed time as the back-off times of the servers 10A, 10C and 10D, respectively.

The access point 20 receives the data 261. Subsequently, the access point 20 transmits ACK 262 to the server 10B, if the channel does not become busy after waiting for the SIFS period in standby.

The receiving unit 102 of the server 10B receives ACK 262 from the access point 20. The packet analyzing unit 105 of the server 10B notifies the resetting unit 134 of reception of ACK 262.

The resetting unit 134 of the server 10B acquires the transmission rate of each node from the setting register 131, and calculates a resetting value using equation (2). Specifically, the resetting unit 134 subtracts a value obtained by subtracting 1 from the transmission rate of the node of itself from the sum of the transmission rates. In this example, because the transmission rate of the server 10B is 1, a value that is obtained by subtracting the value obtained by subtracting 1 from the transmission rate of the node of itself from the sum of the transmission rates is 7. Subsequently, the resetting unit 134 calculates a resetting value by multiplying the calculated value by the slot time. That is, the resetting unit 134 of the server 10B calculates 7xslot time as the resetting value.

The resetting unit 134 of the server 10B resets a period 264 of 7xslot time, which is the resetting value, in the elapsed-time measuring unit 133 as the back-off time.

In this case, the elapsed-time measuring unit 133 of the server 10A sets a period 263 that is the carried over period of 6xslot time, as the back-off time. Moreover, the elapsed-time measuring unit 133 of the server 10C sets a period 265 that is the carried over period of 1×slot time, as the back-off time. Furthermore, the elapsed-time measuring unit 133 of the server 10D sets a period 266 that is the carried over period of 3xslot time, as the back-off time.

In this state, the back-off time of the server 10C is the shortest. Therefore, when the elapsed-time measuring unit 133 of the server 10C determines that the back-off time has passed, the transmitting unit 101 of the server 10C transmits data 267 to the access point 20. At this time, shaded areas of the periods 263, 264, 266 are carried over to following measurement of elapsed time as the back-off times of the servers 10A, 10B and 10D, respectively.

The access point 20 receives the data 267. Subsequently, the access point 20 transmits ACK 268 to the server 10C, if the channel does not become busy after waiting for the SIFS period in standby.

The receiving unit 102 of the server 10C receives ACK 268 from the access point 20. The packet analyzing unit 105 of the server 10C notifies the resetting unit 134 of reception of ACK 268.

The resetting unit 134 of the server 10C receives the notification of reception of ACK 268 from the packet analyzing unit 105. In this case, because the transmission rate of the node of itself is 2, the resetting unit 134 of the server 10C sets a period 271 of 1×slot time in the elapsed-time measuring unit 133 as the back-off time, for the second data transmission.

In this case, the elapsed-time measuring unit 133 of the server 10A sets a period 269 that is the carried over period of 5xslot time, as the back-off time. Moreover, the elapsed-time measuring unit 133 of the server 10B sets a period 270 that is the carried over period of 6xslot time, as the back-off time. Furthermore, the elapsed-time measuring unit 133 of the server 10D sets a period 272 that is the carried over period of 2xslot time, as the back-off time.

In this state, the back-off time of the server 10C is the shortest. Therefore, when the elapsed-time measuring unit 133 of the server 10C determines that the back-off time has passed, the transmitting unit 101 of the server 10C transmits data 273 to the access point 20. At this time, shaded areas of the periods 269, 270, and 272 are carried over to following measurement of elapsed time as the back-off times of the servers 10A, 10B and 10D, respectively.

The access point 20 receives the data 273. Subsequently, the access point 20 transmits ACK 274 to the server 10C, if the channel does not become busy after waiting for the SIFS period in standby.

The receiving unit 102 of the server 10C receives ACK 274 from the access point 20. The packet analyzing unit 105 of the server 10C notifies the resetting unit 134 of reception of ACK 274.

Because the transmission rate of the node of itself is 2 and data transmission is performed twice successively, the resetting unit 134 of the server 10C acquires the transmission rate of each node from the setting register 131, and calculates a resetting value using equation (2). Specifically, the resetting unit 134 subtracts a value obtained by subtracting 1 from the transmission rate of the node of itself from a sum of the transmission rates. In this example, because the transmission rate of the server 10C is 2, a value that is obtained by subtracting the value obtained by subtracting 1 from the transmission rate of the node of itself from the sum of the transmission rates is 6. Subsequently, the resetting unit 134 calculates a resetting value by multiplying the calculated value by the slot time. That is, the resetting unit 134 of the server 10C calculates 6xslot time as the resetting value.

The resetting unit 134 of the server 10C resets a period 277 of 6xslot time, which is the resetting value, in the elapsed-time measuring unit 133 as the back-off time.

In this case, the elapsed-time measuring unit 133 of the server 10A sets a period 275 that is the carried over period of 4xslot time, as the back-off time. Moreover, the elapsed-time measuring unit 133 of the server 10B sets a period 276 that is the carried over period of 5xslot time, as the back-off time. Furthermore, the elapsed-time measuring unit 133 of the server 10D sets a period 278 that is the carried over period of 1×slot time, as the back-off time.

In this state, the back-off time of the server 10D is the shortest. Therefore, when the elapsed-time measuring unit 133 of the server 10D determines that the back-off time has passed, the transmitting unit 101 of the server 10D transmits data 279 to the access point 20. At this time, shaded areas of the periods 275, 276, and 277 are carried over to following measurement of elapsed time as the back-off times of the servers 10A to 10C, respectively.

The access point 20 receives the data 279. Subsequently, the access point 20 transmits ACK 280 to the server 10C, if the channel does not become busy after waiting for the SIFS period in standby. Thereafter, the wireless communication processing explained herein is to be repeated.

While in FIG. 11, a case in which all of the server 10A to 10D have transmission data is illustrated, when the server 10 having no transmission data is included, the transmitting unit 101 does not perform data transmission. In this case, the resetting unit 134 repeats setting 1×slot time as the back-off time until the number of times of communication reaches the number of times corresponding to the value of the transmission rate, and then resets the calculated resetting value in the elapsed-time measuring unit 133, without waiting for reception of ACK. Moreover, when transmission data is generated while performing the resetting processing without waiting for reception of ACK, the resetting unit 134 shifts to processing in which the resetting processing is performed waiting until ACK is received.

As explained above, the information processing apparatus according to the present embodiment sets a transmission rate for each node, and determines an initial value and a resetting value of the back-off time according to the transmission rate of each of the information processing apparatuses such that contention of communication does not occur. Accordingly, even when transmission rates differ for respective nodes, standby time after a channel shifts to an idle state can be reduced, and occurrence of contention of communication can be suppressed.

[d] Fourth Embodiment

Next, an information processing apparatus according to a fourth embodiment is explained. The information processing system according to the present embodiment differs from that of the third embodiment in that each of the servers 10 and the wireless modules 100 are managed by the administration server 2. The information processing system according to the present embodiment is expressed by a configuration diagram in FIG. 8. Moreover, the server 10 according to the present embodiment is also indicated by the block diagram in FIG. 2. Furthermore, the wireless module 100 according to the present embodiment is also indicated by the block diagram in FIG. 3. In the following explanation, explanation of operation of respective components similar to that of the first embodiment is omitted.

The administration server 2 stores transmission rates of each of the wireless modules 100. The administration server 2 makes the setting register 131 of each of the wireless modules 100 store information on the transmission rates of the respective wireless modules 100 through the network switch 30 and the access point 20. The setting register 131 stores the information on the transmission rates of the respective wireless modules 100, for example, in a state as illustrated FIG. 10.

Furthermore, after transmitting the information on the transmission rates to each of the wireless modules 100 and waiting for the SIFS period in standby, the administration server 2 notifies a node number to each of the wireless modules 100. Specifically, the administration server 2 repeats processing of notifying a node number to one of the wireless module 100, receiving ACK from the wireless module 100 to which the node number is notified after the SIFS period passes, and notifying a node number to a next one of the wireless module 100.

Although the administration server 2 is arranged externally from the rack 1 in the present embodiment, the administration server 2 may be mounted in the rack 1.

The access point 20 transmits a beacon to each of the wireless modules 100 at appropriate timing, after a back-off time is set in all the wireless modules 100 connected to the access point 20.

Subsequently, each of the wireless modules 100 starts data transmission processing after receiving a beacon. Thereafter, each of the wireless modules 100 calculates initial values and resetting values according to the transmission rates of the respective nodes, similarly to the third embodiment, and performs data transmission.

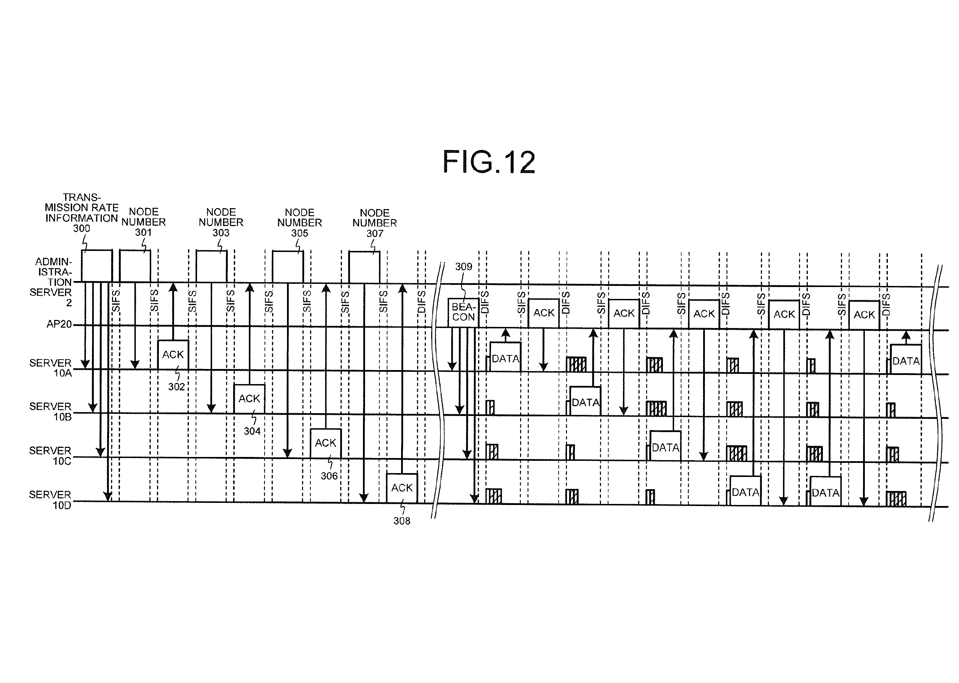

Next, an overall flow of communication in the information processing system according to the present embodiment is explained with reference to FIG. 12. FIG. 12 is a sequence diagram indicating communication in the information processing system according to the fourth embodiment. Here, a case in which servers 10A to 10D are present as the servers 10 is explained. Moreover, one unit of the wireless module 100 is mounted in each of the servers 10A to 10D.

When operation of the information system is started, the administration server 2 transmits transmission rate information 300 including information on the transmission rate of each node to each of the servers 10A to 10D. The transmission rate information 300 indicates that the transmission rate of node #1 and node #2 is 1, the transmission rate of node #3 is 2, and the transmission rate of node #4 is 3.

The administration server 2 waits for the SIFS period in standby after transmitting the transmission rate information 300, and if the channel does not become busy while waiting in standby, transmits node number information 301 to the server 10A. In this example, the node number of the server 10A is 1.

The receiving unit 102 of the server 10A receives a signal including the node number information 301. The receiving unit 102 outputs the received signal to the packet analyzing unit 105. The packet analyzing unit 105 analyzes the signal and notifies the node number information 301 to the initial-value setting unit 132 and the resetting unit 134. Subsequently, the packet analyzing unit 105 notifies the node number to the CPU 11 through the I/F 106 and the crossbar switch 14. In response to reception of the signal, the CPU 11 instructs the transmitting unit 101 to transmit ACK through the crossbar switch 14 and the I/F 106. The transmitting unit 101 transmits ACK 302 to the administration server 2 through the access point 20 and the network switch 30 after the SIFS period passes.

Upon receiving ACK 302, the administration server 2 waits for the SIFS period in standby, and if the channel does not become busy while waiting in standby, transmits node number information 303 to the server 10B. In this example, the node number of the server 10B is 2.

The receiving unit 102 of the server 10B receives a signal including node number information 301. Thereafter, the server 10B performs the same processing as the server 10A. The transmitting unit 101 transmits ACK 304 to the administration server 2 through the access point 20 and the network switch 30 after the SIFS period passes.

Upon receiving ACK 304, the administration server 2 waits for the SIFS period in standby, and if the channel does not become busy while waiting in standby, transmits node number information 305 to the server 10C. In this example, the node number of the server 10C is 3.

The receiving unit 102 of the server 10C receives a signal including the node number information 305. Thereafter, the server 10C performs the same processing as the server 10A. The transmitting unit 101 transmits ACK 306 to the administration server 2 through the access point 20 and the network switch 30 after the SIFS period passes.

Upon receiving ACK 306, the administration server 2 waits for the SIFS period in standby, and if the channel does not become busy while waiting in standby, transmits node number information 307 to the server 10D. In this example, the node number of the server 10D is 4.

The receiving unit 102 of the server 10D receives a signal including the node number information 307. Thereafter, the server 10D performs the same processing as the server 10A. The transmitting unit 101 transmits ACK 308 to the administration server 2 through the access point 20 and the network switch 30 after the SIFS period passes.

The access point 20 waits for elapse of the DIFS period, after the notification of the node numbers to the servers 10A to 10D by the administration server 2 is completed, and after ACK 308 is transmitted from the server 10D. The access point 20 transmits a beacon 309 to each of the servers 10A to 10D at appropriate timing after the DIFS period passes. Upon receiving the beacon 309 from the access point 20, the servers 10A to 10D wait for the DIFS period in standby after detecting that the channel is not busy, and then perform wireless communication processing confirming that the channel is in an idle state. Because the remainder of the wireless communication processing indicated in FIG. 12 is the same as that of the third embodiment, explanation thereof is omitted.

As explained above, the information processing apparatus according to the present embodiment acquires a transmission rate of each node from the administration unit, and performs communication using an initial value and a resetting value of the back-off time that are calculated using the acquired transmission rate. With such a configuration that the administration unit manages transmission rates of respective nodes in a consolidated manner, even if the transmission rates differ for the respective nodes, when the number of nodes is changed, the administration unit can change an initial value and a resetting value promptly according to the change. That is, even when change in the number of nodes occurs in a state in which the transmission rates of the respective nodes differ from each other, reduction of the standby time after a channel shifts to an idle state, and suppression of access contention can be appropriately achieved.

According to one embodiment of a communication apparatus, the communication-apparatus control method, a communication-apparatus control program, an information processing apparatus, and an information processing system, there is an effect that occurrence of access contention can be suppressed while reducing a standby time.

**Claims**

1. A communication apparatus (100) comprising:

   an elapsed-time measuring unit (133) that measures elapsed time of a set standby time;
   a determining unit (104) that determines whether a communication path to a transmission destination of data is available;
   a transmitting unit (101) that transmits data when the standby time passes in a state in which the communication path is available after it is determined that the communication path is available by the determining unit;
   an initial-value setting unit (132) that sets, as the standby time, an initial value that is generated using a predetermined time as a unit at start of data transmission by the transmitting unit, and that is a different value from an initial value of another communication apparatus that communicates with the transmission destination; and
   a resetting unit (134) that resets, as the standby time, a resetting value that is generated using the predetermined time as a unit when the standby time has passed.

2. The communication apparatus (100) according to claim 1, wherein the elapsed-time measuring unit (133) retains remaining time of the standby time when it is determined that the communication path is unavailable by the determining unit during measurement of elapsed time of the standby time, and that resumes measurement using the remaining time as the standby time next time it is determined that the communication path is available by the determining unit.

3. The communication apparatus (100) according to claim 1 or 2, wherein when data to be transmitted is present, the resetting unit (134) resets standby time when the data is transmitted by the transmitting unit, and when data to be transmitted is not present, the resetting unit resets the standby time when the standby time has passed.

4. The communication apparatus (100) according to any one of claims 1 to 3, wherein the initial-value setting unit (132) sets a value that is obtained by multiplying a number assigned to an own apparatus among numbers assigned to respective communication apparatuses that communicate with the communication destination by the predetermined time as an initial value, the numbers assigned so as to differ from each other setting number of units of the communication apparatuses as an upper limit.

5. The communication apparatus (100) according to any one of claims 1 to 4, wherein the resetting unit (134) sets a value obtained by multiplying number of communication apparatus that communicate with the communication destination by the predetermined time as the resetting value.

6. The communication apparatus (100) according to any one of claims 1 to 5, wherein the initial-value setting unit (132) and the resetting unit acquire each of the initial value and the resetting value from an administration device.

7. The communication apparatus (100) according to any one of claims 1 to 3, wherein
   the initial-value setting unit (132) calculates the initial value based on respective transmission rates of communication apparatuses that communicate with the communication destination,

the resetting unit (134) calculates the resetting value based on the respective transmission rates of the communication apparatuses that communicate with the communication destination, and
the transmitting unit (101) transmits data according to the transmission rate.

8. The communication apparatus (100) according to claim 7, wherein where a transmission rate of a communication apparatus having a first number is 1 when serial numbers are assigned to respective communication apparatuses that communicate with the communication destination, the initial-value setting unit (132) sets a value obtained by multiplying the transmission rate of the apparatus by the predetermined time as an initial value of the apparatus, and as for communication apparatuses having other numbers, a value obtained by multiplying a value of a sum of an initial value and a transmission rate of a communication apparatus having a next lower number from that of the apparatus by the predetermined time is set as an initial value.

9. The communication apparatus (100) according to claim 7 or 8, wherein when serial numbers are assigned to respective communication apparatuses that communicate with the communication destination, the resetting unit (134) sets a value obtained by subtracting 1 from a transmission rate of an own apparatus, by subtracting the value thus obtained from a sum of transmission rates of the respective communication apparatuses, and by multiplying a result of subtraction by the predetermined time, as a resetting value.

10. The communication apparatus (100) according to claim 9, wherein the resetting unit (134) controls the transmitting unit to repeat transmission of data according to a transmission rate of the own apparatus when the standby time has passed, and resets the resetting value as the standby time when the transmission of data according to the transmission rate of the own apparatus is completed.

11. The communication apparatus (100) according to any one of claims 7 to 10, wherein the initial-value setting unit (132) and the resetting unit (134) receive transmission rates of respective communication apparatuses that communicate with the communication destination from an administration device.

12. The communication apparatus according to any one of claims 1 to 11, wherein the determining unit (104) determines that the communication path is available when a state in which there is no signal sent through the communication path has continued for a predetermined determination period.

13. A communication-apparatus control method comprising:

setting, as a standby time, an initial value that is generated using a predetermined time as a unit, and that is a different value from an initial value of another communication apparatus that communicates with a transmission destination of data;
determining whether a communication path to the transmission destination is available;
starting measurement of elapsed time of the standby time when the transmission path is available;
transmitting data when the standby time has passed in a state in which the communication path is available; and
resetting, as the standby time, a resetting value that is generated using the predetermined time as a unit.

14. A communication-apparatus control program that causes a computer to execute a process, the process comprising:

setting, as a standby time, an initial value that is generated using a predetermined time as a unit, and that is a different value from an initial value of another communication apparatus that communicates with a transmission destination of data;
determining whether a communication path to the transmission destination is available;
starting measurement of elapsed time of the standby time when the transmission path is available;
transmitting data when the standby time has passed in a state in which the communication path is available; and
resetting, as the standby time, a resetting value that is generated using the predetermined time as a unit.

15. An information processing system (1) that includes an access point (20) and a plurality of information processing apparatuses (10), wherein
the information processing apparatus (10) includes a wireless module (100) that communicates with the access point (20), an operation processing unit (11), and a storage unit (13), and
the wireless module (100) includes:

a determining unit (104) that determines whether a communication path to the access point is available;

a transmitting unit (101) that transmits data when a standby time passes in a state in which the communication path is available after it is determined that the communication path is available by the determining unit;

an initial-value setting unit (132) that sets, as the standby time, an initial value that is generated using a predetermined time as a unit at start of data transmission by the transmitting unit, and that is a different value from initial values of other wireless modules included in an information processing apparatus on which the own module is mounted and other wireless modules included in other information processing apparatus that communicate with the access point; and

a resetting unit (134) that resets, as the standby time, a resetting value that is generated using the predetermined time as a unit when the standby time has passed.

# FIG.1

# FIG.2

# FIG.3

EP 2 844 019 A1

# FIG.4

150

| BIT | FIELD | EXPLANATION |
|---|---|---|
| 31:8 | rsv | RESERVE |
| 7:4 | RESETTING VALUE | BACK-OFF TIME RETURNING AFTER BACK-OFF TIME HAS PASSED<br>0000: NO SETTING ALLOWED<br>0001: 1×SLOT TIME<br>0010: 2×SLOT TIME<br>0011: 3×SLOT TIME<br>· · · ·<br>1111: 15×SLOT TIME |
| 3:0 | INITIAL VALUE | INITIAL VALUES OF BACK-OFF TIME<br>0000: NO SETTING ALLOWED<br>0001: 1×SLOT TIME<br>0010: 2×SLOT TIME<br>0011: 3×SLOT TIME<br>· · · ·<br>1111: 15×SLOT TIME |

# FIG.5

EP 2 844 019 A1

# FIG.6

EP 2 844 019 A1

# FIG.7

```
                    START

              SET SETTING REGISTER          ── S1

        SET INITIAL VALUE AS BACK-OFF TIME  ── S2

                                    ── S3
  NO ◄────      IS CHANNEL IDLE?
                      │ YES
                                    ── S4
  NO ◄────      HAS DIFS PASSED?
                      │ YES

           PERFORM SUBTRACTION ON BACK-OFF   ── S5
                      TIME

                                    ── S6
  NO ◄────      HAS BACK-OFF
                 TIME PASSED?
                      │ YES
                                    ── S7
  NO ◄────           IS
              TRANSMISSION DATA
                  PRESENT?
                      │ YES

                 TRANSMIT DATA               ── S8

                                    ── S9
              IS ACK RECEIVED?         NO
                      │ YES

        SET RESETTING VALUE AS BACK-OFF      ── S10
                     TIME

                                    ── S11
  NO ◄────     IS COMMUNICATION
                 COMPLETED?
                      │ YES

                     END
```

24

# FIG.8

# FIG.9

EP 2 844 019 A1

# FIG.10

<span>┌ 151</span>

| BIT | FIELD | EXPLANATION |
|---|---|---|
| 31:24 | rsv | RESERVE |
| 23:21 | NODE #8 TRANSMISSION RATE | 001: TRANSMISSION RATE 1<br>010: TRANSMISSION RATE 2<br>...<br>111: TRANSMISSION RATE 7 |
| 20:18 | NODE #7 TRANSMISSION RATE | SAME AS ABOVE |
| 17:15 | NODE #6 TRANSMISSION RATE | SAME AS ABOVE |
| 14:12 | NODE #5 TRANSMISSION RATE | SAME AS ABOVE |
| 11:9 | NODE #4 TRANSMISSION RATE | SAME AS ABOVE |
| 8:6 | NODE #3 TRANSMISSION RATE | SAME AS ABOVE |
| 5:3 | NODE #2 TRANSMISSION RATE | SAME AS ABOVE |
| 2:0 | NODE #1 TRANSMISSION RATE | SAME AS ABOVE |

# FIG.11

# FIG.12

Europäisches
Patentamt

European
Patent Office

Office européen
des brevets

## EUROPEAN SEARCH REPORT

Application Number

EP 14 17 6882

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/193274 A1 (YAMAGATA TOMONARI [JP]) 31 August 2006 (2006-08-31) * abstract * * paragraph [0065] * * paragraph [0068] - paragraph [0069] * * paragraph [0073] * * paragraph [0076] * * figure 3 * ----- | 1-7, 12-15 | INV. H04W74/08 |
| A | US 2013/201974 A1 (MERLIN SIMONE [US] ET AL) 8 August 2013 (2013-08-08) * abstract * * paragraph [0066] * * paragraph [0067] * ----- | 1-15 | |

TECHNICAL FIELDS
SEARCHED     (IPC)

H04W

The present search report has been drawn up for all claims

| Place of search | Date of completion of the search | Examiner |
|---|---|---|
| The Hague | 27 January 2015 | Larcinese, Concetta |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

EP 2 844 019 A1

## ANNEX TO THE EUROPEAN SEARCH REPORT
## ON EUROPEAN PATENT APPLICATION NO.

EP 14 17 6882

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2015

| Patent document cited in search report | | Publication date | Patent family member(s) | | Publication date |
|---|---|---|---|---|---|
| US 2006193274 | A1 | 31-08-2006 | CN | 1819538 A | 16-08-2006 |
| | | | JP | 4591104 B2 | 01-12-2010 |
| | | | JP | 2006222608 A | 24-08-2006 |
| | | | US | 2006193274 A1 | 31-08-2006 |
| US 2013201974 | A1 | 08-08-2013 | CN | 104094664 A | 08-10-2014 |
| | | | EP | 2813123 A2 | 17-12-2014 |
| | | | US | 2013201974 A1 | 08-08-2013 |
| | | | WO | 2013119696 A2 | 15-08-2013 |

EPO FORM P0459

For more details about this annex : see Official Journal of the European Patent Office, No. 12/82

EP 2 844 019 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012178694 A
- JP 2005064795 A